# EUROPÄISCHE PATENTANMELDUNG

(11) **EP 1 469 063 A1**
(43) Veröffentlichungstag der Anmeldung: **20.10.2004**
(21) Anmeldenummer: 04450060.1
(22) Anmeldetag: 12.03.2004
(51) Int. Cl.: C12H 1/18

(54) **Verfahren zum Stabilisieren von Emulsionen von Vitaminen in einer flüssigen Phase**

(30) Priorität: 12.03.2003 AT 1702003
(71) Anmelder: Unipack Ges M.B.H, 2700 Wiener Neustadt (AT)
(72) Erfinder: Burghart, Kurt, Dr., A-2700 Wiener Neustadt (AT); Burghart, Walter, Ing., A-1030 Wien (AT)
(74) Vertreter: Haffner, Thomas M., Dr.

(57) **Zusammenfassung**

Bei einem Verfahren zum Stabilisieren von Vitaminlösungen enthaltend Weine und/oder aromatisierte Weine, wie z.B. Wermut, werden die Weine vor dem Zusatz der Vitaminlösungen auf Temperaturen über 50° erhitzt.

## Beschreibung

Die Erfindung bezieht sich auf ein Verfahren zum Stabilisieren von Vitaminlösungen die gleichzeitig Weine, insbesondere aromatisierte Weine, wie z.B. Wermut, enthalten.

Die Verwendung von Weinen bzw. aromatisierten Weinen, und insbesondere von Wermut, zur Abdeckung eines unerwünschten Geschmackes von Vitaminzubereitung ist seit einiger Zeit bekannt. Neben Wein können derartige Zubereitungen aber,auch entsprechende Emulgatoren enthalten, um fettlösliche Vitamine in eine entsprechend klare, stabile Lösung überzuführen.

Vitaminzubereitungen enthaltend Weine und aromatische Zusätze, wie z.B. Wermut, werden üblicherweise so zubereitet, dass zunächst ausgehend von Rohwein durch Zusatz von Aromen, Gewürzen und insbesondere Kräuterextrakten und Süssungmittel ein entsprechend aromatisierter Wein, beispielsweise Wermut, hergestellt wird und ein derartiges Produkt in der Folge mit Vorkonzentraten enthaltend die fett- bzw. wasserlöslichen Vitamine vermischt wird. Bedingt durch die Verwendung des Naturproduktes Rohwein sind allerdings in einem derartigen Mehrstoffsystem eine Reihe von unkontrollierbaren Phänomenen entstanden, wobei insbesondere Trübungen der Lösung oder Ausfällungen aus der klaren Lösung und vorzeitige Instabilität der Zubereitung beobachtet wurde. Die Trübung entwickelt sich weiter bis zur völligen Trennung in eine Wasser- und eine Ölphase und der darin enthaltenen Vitamine. Im Laufe der weiteren Lagerung kommt es zu einer Anreicherung der Ölphase mit den Vitaminen A und D an der Oberfläche des Flascheninhalts. Bei Entnahme durch den Patienten kann derselbe eine mehrfache Überdosierung der Vitamine A und D einnehmen, was gesundheitlich nicht unbedenklich ist.

Die Reinigung und Aufbereitung von Wermut erfordert in diesem Zusammenhang eine hohe Sorgfalt, um unerwünschte Wechselwirkungen, und insbesondere verringerte Haltbarkeit der Vitaminzubereitung, hintanzuhalten. Die Vitamine selbst zeichnen sich durch unterschiedliche Löslichkeiten in unterschiedlichen Lösungsmitteln aus und es ist insbesondere eine erste Gruppe von Vitaminen, nämlich Vitamin A, Vitamin D und Vitamin E in wäßrigen Lösungsmitteln nicht ohne weiteres klar lösbar. Diese fettlöslichen Vitamine müssen daher mit einem Emulgator bzw. Lösungsvermittler in eine stabile, klare, micellare Lösung gebracht werden, um gleichbleibende Vitaminkonzentration je Volumseinheit der fertigen flüssigen Zubereitung zu gewährleisten.

Bei der Auswahl der entsprechenden Rohweine für die Herstellung von Wermut wurde im Laufe der Lagerung eine vorzeitige Phasentrennung trotz der Verwendung von Emulgatoren, wie beispielsweise Polysorbaten, beobachtet. Diese vorzeitige Trübung wurde in einer großen Anzahl von Einzelversuchen zur Elimination von Fremdeinflüssen schlußendlich als enzymatischer Störreaktionen identifiziert, wobei die Trübung erst nach Ablauf einer vorbestimmten zeit und in der Regel erst nach Ablauf von etwa 14 Tagen signifikant zunimmt.Nach einigen Wochen kommt es dann zur Phasentrennung und völligen Ungenießbarkeit des Vitamintonikums.

Die Erfindung zielt nun darauf ab, derartige Trübungserscheinungen und Phasentrennungen bei Verwendung des eingangs genannten Mehrstoff- bzw. Mehrphasengemisches zu verhindern und ein Verfahren zu schaffen, mit welchem die beobachteten Trübungen auch nach längerem Zeitraum nicht mehr auftreten. Zur Lösung dieser Aufgabe besteht das erfindungsgemäße Verfahren im Wesentlichen darin, dass die Weine vor dem Zusatz der Vitaminlösungen auf Temperaturen über 50° C, insbesondere über 65° C und bis maximal den Siedepunkt, insbesondere unterhalb des Siedepunktes, erhitzt werden. Durch eine derartige Erhitzung konnten störende Enzyme deaktiviert werden, sodass die zuvor beobachtete Trübung in der Folge nicht mehr auftrat. Der jeweils für das Deaktivieren von Enzymen erforderliche Zeitraum ist von der gewählten Temperatur abhängig, wobei die erforderliche Zeit für ein wirkungsvolles Deaktivieren derartiger Enzyme bei Temperaturen knapp unter 90° C auf wenige Minuten zurückgeht. Um die Qualität des Weines bzw. Wermuts bei diesen hohen Temperaturen nicht zu zerstören, wird dabei eine intensive Schutzbegasung, insbesondere mit CO₂, durchgeführt. Mit Vorteil wird das erfindugsgemäße Verfahren so durchgeführt, dass die Erhitzung auf Temperaturen von 80° C bis 95° C, insbesondere 85° C bis 87° C, über einen Zeitraum von weniger als 30 min, vorzugsweise 1 bis 10 min, erfolgt, worauf auf Umgebungstemperaturen gekühlt und erforderlichenfalls sedimentiert oder filtriert wird. Für den Fall, dass bei einer derartigen Erhitzung über einen längeren Zeitraum ein höherer Anteil an Alkohol verdampft, kann das Verfahren am Rückfluß durchgeführt werden, um auf diese Weise kondensierenden Alkohol wiederum in den Wein zurückzuleiten. Alternativ kann der Alkoholgehalt aber auch in der Folge durch Zugabe entsprechend wieder ergänzt werden.

Überraschender Weise hat sich nun gezeigt, dass die Stabilität von bestimmten Vitaminen, und insbesondere von Thiamin bzw. Vitamin B₁, wesentlich verbessert werden kann, wenn eine entsprechend längere Temperaturbehandlung unter Durchleiten der Gase vorgenommen wird. Eine Langzeitstabilität von Vitamin B₁ bis über zwei Jahre, bei zimmertemperatur gelagert, konnte überraschender Weise dadurch erzielt werden, dass der Wein auf Temperaturen zwischen 60° C und 90° C, vorzugsweise 70° C bis 75° C, unter Durchleiten von CO₂ durch die erhitzte Flüssigkeit gehalten wird. Die Temperaturbehandlung unter Durchleiten von CO₂ führt hierbei offensichtlich zur Abnahme des Restschwefels im Rohwein/Wermut, was insbesondere in der Folge zu einer Erhöhung der Stabilität von Vitamin B₁ (Thiamin HCL) im Vitaminfertigprodukt führt. Die in aller Regel bei der Herstellung von Wein vorgenommene Schwefelung dient der Verbesserung der Haltbarkeit des Weines, da durch die Aldehyd-Sulfit Adukte mikrobieller Zerfall und Oxidation hintangehalten wird. Der gleiche Schwefel zerstört aber nachhaltig Vitamin B₁ und führt daher zu einer entsprechend geringen Langzeitstabilität der Vitaminzubereitung. Durch Durchleiten von CO₂ durch die erhitzte Flüssigkeit wird SO₂ rasch ausgetrieben. Da wie bereits erwähnt als wesentlicher Störfaktor der gebundene und freie Schwefelgehalt angenommen wurde wird das erfindungsgemäße Verfahren mit Vorteil so durchgeführt, dass CO₂ bis zur Absenkung des Gesamtschwefels auf unter 50mg/1 durchgeleitet wird. Dies gilt für ein Vitaminpräparat mit einem Vitamin B₁ Gehalt von 5mg/100ml. Bei niedrigeren Bl-Gehalt sind geringere Schwefelgehalte kritisch und es muss der Schwefelgehalt weiter abgesenkt werden. Auf diese Weise wird sichergestellt, dass jeweils nur die tatsächlich erforderliche Zeit aufgewandt wird, da ja der ursprüngliche Schwefelgehalt von Rohwein zu Rohwein verschieden ist. Mit Vorteil wird das Verfahren so durchgeführt, dass CO₂ über einen Zeitraum von 8 bis 48 h durch die heiße Flüssigkeit geleitet wird.

Insgesamt lassen sich mit dem erfindungsgemäßen Verfahren Vitaminzubereitungen herstellen, welche die erforderliche Langzeitstabilität bei Lagerung bei Zimmertemperatur (25° C) hinsichtlich der klaren Lösung und damit der homogenen Vitamindosierung durch den Verbraucher als auch hinsichtlich des Vitamin B₁ Gehaltes auch über einen Zeitraum von mehr als zwei Jahren sicherstellen. Weiters kann erfindungsgemäß schwefelfreier Wein bereitgestellt werden, dessen Langzeitstabilität durch Zusatz von Ascorbinsäure und gegebenenfalls durch Zerstörung der Enzyme weiter verbessert werden kann.

Im Rahmen von Vergleichsuntersuchungen wurden vier Chargen miteinander verglichen, deren Trübungswerte (NTU, O bis 100) mit und ohne Wärmebehandlung gemessen wurden.

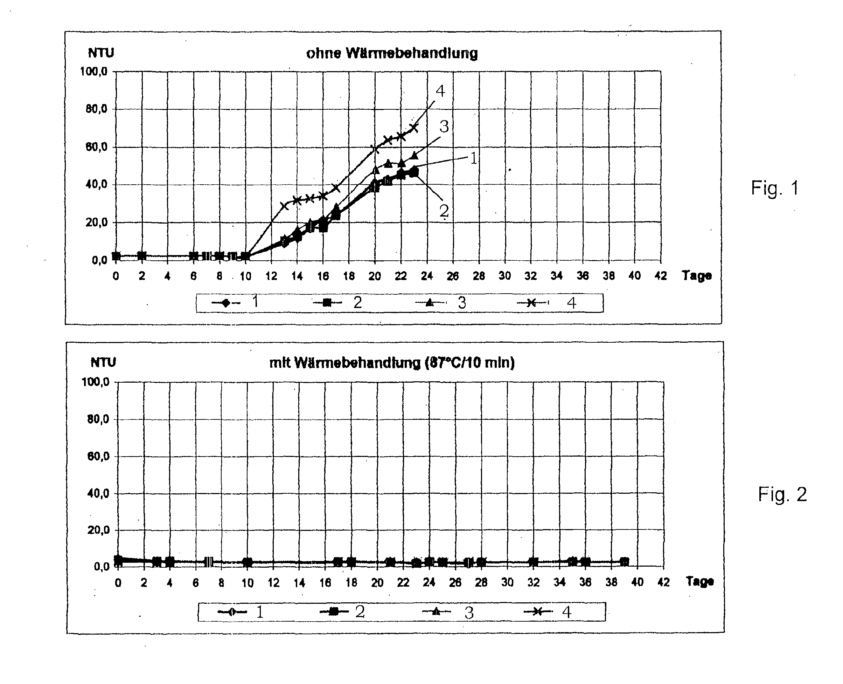

Fig.1 zeigt den zeitlichen Verlauf der Trübungswerte für Chargen ohne Wärmebehandlung und Fig.2 für Chargen gleicher Zu-sammensetzung nach einer Wärmebehandlung bei 87°C über 10 min. Während Chargen ohne die erfindungsgemäße Wärmebehandlung nach 14 Tagen bereits deutliche Trübung zeigten waren die behandelten Chargen über den gesamten Messzeitraum stabil. Ebenso wurden Chargen ohne abgesenkten Schwefelgehalt den erfindungsgemäß behandelten Chargen gegenüber gestellt, bei welchen CO₂ bei 70°C bis zur Absenkung des Schwefelgehaltes auf unter 50mg/1 hindurch geleitet wurde. Der unbehandelte Wermut wies einen Schwefelgehalt von 118mg/l auf. Bei einem Sollwert von 4,0mg Vitamin B₁/100ml Tonikum wurden nach 18 Monaten lediglich 2,7 bis 2,9mg/100ml gefunden. Demgegenüber waren die Vitamin B₁ Konzentrationen bei gemessenen abgesenkten Schwefelgehalten von 29,0mg/l, 14,0mg/l und 9,0mg/l nach 18 Monaten als im Wesentlichen unverändert ermittelt worden.

## Patentansprüche

1. Verfahren zum Stabilisieren von Vitaminlösungen enthaltend Weine und/oder aromatisierte Weine, wie z.B. Wermut, **dadurch gekennzeichnet, dass** die Weine vor dem Zusatz der Vitaminlösungen auf Temperaturen über 50° C erhitzt werden.

2. Verfahren nach Anspruch 1, **dadurch gekennzeichnet, dass** die Weine auf Temperaturen von über 65°C und unterhalb des Siedepunktes erhitzt werden.

3. Verfahren nach Anspruch 1 oder 2, **dadurch gekennzeichnet, dass** die Erhitzung auf Temperaturen von 80° C bis 95° C, insbesondere 85° C bis 87° C, über einen Zeitraum von weniger als 30 min, vorzugsweise 1 bis 10 min, erfolgt, worauf auf Umgebungstemperaturen gekühlt und erforderlichenfalls sedimentiert oder filtriert wird.

4. Verfahren zum Entschwefeln von Weinen, insbesondere für die Herstellung von stabilen Vitaminlösungen, **dadurch gekennzeichnet, dass** die Weine auf Temperaturen zwischen 60° C und 90° C, vorzugsweise 70° C bis 75° C, unter Durchleiten von Schutzgasen, wie z.B. CO₂, durch die erhitzten Weine, bis zur Absenkung des Gesamtschwefels auf unter 50mg/l gehalten werden.

5. Verfahren nach Anspruch 4, **dadurch gekennzeichnet, dass** CO₂ über einen Zeitraum von 8 bis 48 h durch die heiße Flüssigkeit geleitet wird.

6. Verfahren nach einem der Ansprüche 4 oder 5, **dadurch gekennzeichnet, dass** dem auf Schwefelgehalt unter 5mg/l entschwefelten Wein Ascorbinsäure zugesetzt wird.

7. Verwendung von bei Temperturen über 50°C wärmebehandelten Weinen, wie z.B. Wermut, für die Herstellung von stabilen Vitaminlösungen

## Geänderte Patentansprüche

### Geänderte Patentansprüche gemäss Regel 86(2) EPÜ.

**1.** Verfahren zum Stabilisieren von Vitaminlösungen enthaltend Weine und/oder aromatisierte Weine, wie z.B. Wermut, **dadurch gekennzeichnet, dass** die Weine vor dem Zusatz der Vitaminlösungen auf Temperaturen über 50° C erhitzt werden.

**2.** Verfahren nach Anspruch 1, **dadurch gekennzeichnet, dass** die Weine auf Temperaturen von über 65°C und unterhalb des Siedepunktes erhitzt werden.

**3.** Verfahren nach Anspruch 1 oder 2, **dadurch gekennzeichnet, dass** die Erhitzung auf Temperaturen von 80° C bis 95° C, insbesondere 85° C bis 87° C, über einen Zeitraum von weniger als 30 min, vorzugsweise 1 bis 10 min, erfolgt, worauf auf Umgebungstemperaturen gekühlt und erforderlichenfalls sedimentiert oder filtriert wird.

**4.** Verfahren nach Anspruch 1,2 oder 3, **dadurch gekennzeichnet, dass** die Weine auf Temperaturen zwischen 60° C und 90° C, vorzugsweise 70° C bis 75° C, unter Durchleiten von Schutzgasen, wie z.B. CO₂, durch die erhitzten Weine gehalten werden, wodurch eine Absenkung des Schwefelgehalts des Weins erfolgt.

**5.** Verfahren nach Anspruch 4, **dadurch gekennzeichnet, dass** das Durchleiten von Schutzgasen, wie z.B. CO₂, bis zur Absenkung des Gesamtschwefelgehalts des Weins auf unter 50 mg/l vorgenommen wird.

**6.** Verfahren nach Anspruch 4 oder 5, **dadurch gekennzeichnet**, CO₂ über einen Zeitraum von 8 bis 48 h durch die heiße Flüssigkeit geleitet wird.

**7.** Verfahren nach einem der Ansprüche 4,5 oder 6, **dadurch gekennzeichnet, dass** dem auf Schwefelgehalt unter 5mg/l entschwefelten Wein Ascorbinsäure zugesetzt wird.
